# EUROPÄISCHE PATENTSCHRIFT

(11) **EP 3 364 344 B1**
(45) Veröffentlichungstag und Bekanntmachung des Hinweises auf die Patenterteilung: **03.11.2021**
(21) Anmeldenummer: 18152006.5
(22) Anmeldetag: 17.01.2018
(51) Int. Cl.: G06K 19/077

(54) **VERFAHREN ZUR HERSTELLUNG EINES INLAYS FÜR EINEN FOLIENVERBUND EINES SICHERHEITS- UND/ODER WERTDOKUMENTES SOWIE INLAY**
METHOD FOR PRODUCING AN INLAY FOR A FILM COMPOSITE OF A SECURITY DOCUMENT AND/OR VALUABLE DOCUMENT AND INLAY
PROCÉDÉ DE FABRICATION D'UNE INCRUSTATION EN PROFONDEUR POUR UN FILM COMPOSITE D'UN DOCUMENT DE SÉCURITÉ ET/OU DE VALEUR AINSI QU'INCRUSTATION EN PROFONDEUR

(30) Priorität: 20.02.2017 DE 102017103411
(43) Veröffentlichungstag der Anmeldung: 22.08.2018
(73) Patentinhaber: Bundesdruckerei GmbH, 10969 Berlin (DE)
(72) Erfinder: Baudach, Dr. Steffen, 13189 Berlin (DE)
(74) Vertreter: Mammel und Maser

(56) Entgegenhaltungen:
- EP-A1- 0 919 950
- EP-A2- 0 071 255
- WO-A1-2014/095232
- DE-A1-102012 001 346
- US-A1- 2009 057 414
- US-A1- 2015 298 389

## Beschreibung

Die Erfindung betrifft ein Verfahren zur Herstellung eines Inlays für einen Folienverbund eines Sicherheits- oder Wertdokumentes sowie ein Inlay für einen solchen Folienverbund.

Aus der DE 10 2012 001 346 A1 ist ein Verfahren zur Herstellung eines Inlays für einen Folienverbund eines Sicherheits- oder Wertdokumentes bekannt, bei dem auf eine Trägerfolie wenigstens eine Antenne aufgebracht wird. Ein Chip kontaktiert die Antenne in einem Anschlussbereich. Der Mikrochip wird mit einem Klebstoff im Anschlussbereich fixiert. Ergänzend ist eine Ausgleichsfolie mit einer Aussparung vorgesehen, die den Mikrochip umgibt. Bevor die Aussparung der Ausgleichsfolie vollständig mit einer Deckfolie geschlossen und die Deckfolie zusammen mit den weiteren Schichten laminiert wird, erfolgt drucktechnisch ein Einbringen eines Stabilisierungsmittels in die Aussparung auf den Chip, sodass das Stabilisierungsmittel den Chip umgeben kann. Nach dem Laminieren wird das Stabilisierungsmittel aktiviert.

Aus der DE 10 2011 001 722 A1 ist ein Inlay für einen Folienverbund bekannt. Dieses Inlay umfasst eine Trägerfolie, auf welchem wenigstens eine Antenne aufgebracht ist. In einem Anschlussbereich auf der Trägerfolie, in welchem ein Mikrochip mit der Antenne kontaktiert wird, ist ein Klebstoff aufgebracht. Der Mikrochip wird durch den Klebstoff zur Trägerfolie gehalten. Dabei bildet sich entgegen dem Mikrochip ein seitlich heraustretender Klebstoffrand, der als Klebstoffmeniskus bezeichnet wird. Auf der Trägerfolie ist eine Ausgleichsfolie mit einer Aussparung aufgebracht, wobei innerhalb der Aussparung der Mikrochip und der Klebstoffmeniskus vorgesehen sind. Auf dieser Ausgleichsfolie ist eine Deckfolie vorgesehen, welche die Aussparung vollständig überdeckt. Durch die Aussparung der Ausgleichsfolie sowie der Trägerfolie und Deckfolie ist ein Ausschnittfenster gebildet, welches aufgrund des darin angeordneten Mikrochips und Klebstoffs Freiräume aufweist.

Aus der WO 2014/095232 A1 ist des Weiteren ein Verfahren zur Herstellung eines Inlays für einen Folienverbund, eines Sicherheits- oder Wertdokuments sowie ein Inlay bekannt, welches im Aufbau analog dem vorbeschriebenen Inlay entspricht.

Aus der EP 0 071 255 A1 ist eine tragbare Karte zur Informationsverarbeitung bekannt, bei welcher innerhalb einer Aussparung in einer Ausgleichslage ein Mikrochip vorgesehen ist.

Aus der US 2009/0057414 A1 ist ein Verfahren zur Herstellung einer mikroelektronischen Vorrichtung, wie beispielsweise ein elektronischer Reisepass, bekannt. In der Aussparung einer Schicht ist ein Mikrochip vorgesehen, wobei der Mikrochip beziehungsweise die Aussparung mit einer Ausgleichsmasse gefüllt ist.

Aus der EP 0 919 950 A1 ist eine EC-Karte bekannt. Diese EC-Karte weist eine mittlere Schicht mit einer Ausstanzung auf, in welche ein EC-Kartenmodul eingesetzt ist. Darauffolgend wird die mittlere Schicht mit dem in der Ausstanzung eingesetzten EC-Kartenmodul mit einer oberen und unteren Deckschicht versehen. Des Weiteren kann vorgesehen sein, dass der EC-Chip in eine Aussparung einer Schicht eingesetzt wird und die Aussparung mit einer Ausgleichsmasse gefüllt ist.

Aus der US 2015/0298389 A1 ist des Weiteren das Einbringen einer elektrischen Komponente in einem Laminat bekannt.

Der Erfindung liegt die Aufgabe zugrunde, ein Verfahren zur Herstellung eines Inlays für einen Folienverbund eines Sicherheits- oder Wertdokumentes vorzuschlagen, bei welchem ein Ausschuss in der Produktion durch Chip- und/oder Antennenbrüche reduziert oder verhindert wird. Des Weiteren liegt der Erfindung die Aufgabe zugrunde, ein Inlay für einen Folienverbund vorzuschlagen, welches einen einfachen Aufbau zur Verringerung des Ausschusses bei der Produktion ermöglicht.

Diese Aufgabe wird durch ein Verfahren zum Herstellen eines Inlays für einen Folienverbund eines Sicherheits- oder Wertdokumentes gelöst, bei welchem vor dem Laminieren einer Trägerfolie und einer Deckfolie mit einer dazwischen angeordneten Ausgleichsfolie, durch welche in einer Aussparung der Ausgleichsfolie ein Ausschnittfenster gebildet wird, in welchem der Mikrochip positioniert ist, und zumindest ein Freiraum verbleibt, und dieser zumindest eine Freiraum mit einer Ausgleichsmasse gefüllt wird, wobei die Ausgleichsmasse mit einem Volumen eingebracht wird, welches größer als der zumindest eine Freiraum in der Aussparung ist. Beim Herstellen eines solchen Inlays wird also auf eine Trägerfolie wenigstens eine Antenne aufgebracht, vorzugsweise aufgedruckt. In einem Anschlussbereich der Antenne wird der Mikrochip mit der Antenne kontaktiert. Zur Fixierung des Mikrochips im Anschlussbereich ist ein Klebstoff vorgesehen, der vorzugsweise auf der kompletten Rückseite des Mikrochips aufgebracht ist. Auf die Trägerfolie wird eine Ausgleichsfolie mit einer Aussparung für den Mikrochip aufgebracht. Die Reihenfolge zum Aufbringen des Klebstoffs auf die Trägerfolie oder auf den Mikrochip sowie des Mikrochips und der Ausgleichslage auf die Trägerfolie ist beliebig und kann nach prozesstechnischen Gesichtspunkten ausgewählt werden. Auf die Ausgleichsfolie wird eine Deckfolie aufgebracht, welche die Aussparung vollständig überdeckt. Dadurch wird ein Ausschnittfenster gebildet, welches sich innerhalb der Aussparung der Ausgleichsfolie erstreckt und durch die Trägerfolie und die Deckfolie begrenzt ist. Dieses Ausschnittfenster ist durch den Mikrochip und den Klebstoff, der den Mikrochip auf der Trägerfolie fixiert, nur teilweise ausgefüllt, wodurch sich im Ausschnittfenster zumindest ein Freiraum bildet. Dieser Freiraum wird erfindungsgemäß mit der Ausgleichsmasse des aus dem Stapel zu bildenden Folienverbunds gefüllt. Anschließend erfolgt eine Lamination der übereinanderliegenden Schichten. Durch das Ausfüllen des zumindest einen Freiraums im Ausschnittfenster mit der Ausgleichsmasse wird eine gleichmäßigere flächige Belastung beziehungsweise eine gleichmäßige Verteilung des Druckes auf das Inlay während der Laminierung ermöglicht, wodurch eine mechanische Belastung des Inlays reduziert wird. Gegebenenfalls auftretende Biegebelastungen, die zu Brüchen in dem Mikrochip und/oder der Antenne führen können, werden dadurch herabgesetzt oder reduziert.

Die Ausgleichsmenge wird mit einem Volumen in das Ausschnittfenster eingebracht, welches geringfügig größer, beispielsweise um bis zu 10 Prozent oder bevorzugt bis zu 5 Prozent größer, als der zumindest eine Freiraum ist. Dies weist den Vorteil auf, dass die Ausgleichsmasse sich insbesondere über den Randbereich der Aussparung der Ausgleichsfolie hinaus und zwischen die Ausgleichsfolie und der darüber liegenden Deckschicht erstrecken kann. Bei der Herstellung der Aussparung in der Ausgleichsfolie können aufgeschmolzene Kanten oder Schmelznasen am Rand der Aussparung entstehen, welche gegenüber einer Oberseite oder einer Unterseite der Ausgleichsfolie hervorstehen. Diese aufgeschmolzenen Kanten werden durch die Ausgleichsmasse umhüllt und quasi geglättet, so dass wiederum erhöhte mechanische Belastungen bei der darauffolgenden Lamination zumindest herabgesetzt oder sogar verhindert werden können.

Des Weiteren wird bevorzugt die Ausgleichsmasse in einem Volumen eingebracht, so dass der Mikrochip vollständig überdeckt ist und der zumindest eine Freiraum ausgefüllt wird. Diese vollständige Überdeckung des Mikrochips ermöglicht eine weitere Verringerung einer Bruchgefahr. Beim Aufbringen, insbesondere Aufdrücken des Mikrochips auf den Klebstoff, wird eine Unterseite des Mikrochips bevorzugt vollflächig in einem Klebstoffbett eingenommen. Im Randbereich des Mikrochips kann sich der Klebstoff bis über einen oberen Randbereich des Mikrochips erstrecken, so dass der obere Randbereich des Mikrochips mit einer Wulst aus Klebstoff zumindest teilweise umgeben ist. Durch das vollständige Überdecken der Oberseite des Mikrochips mit der Ausgleichsmasse kann gleichzeitig ein Ausgleich von erhöhten mechanischen Belastungen während des Laminierens erfolgen, welche durch diese Wulst bedingt sein können.

Die Aussparung in der Ausgleichsfolie ist bevorzugt größer als eine flächige Erstreckung des Klebstoffmeniskus auf der Trägerfolie, der durch den seitlich gegenüber dem Mikrochip heraustretenden Klebstoff nach dem Aufbringen des Mikrochips und Aushärten des Klebstoffs gebildet wird. Dies weist wiederum den Vorteil auf, dass die Ausgleichsfolie mit einem Randbereich, der durch die Aussparung begrenzt ist, vollflächig auf der Trägerfolie beziehungsweise unter Zwischenschaltung von Antennenwindungen auf der Trägerfolie aufliegen kann. Dadurch können Aufwerfungen des Randbereichs der Aussparung durch einen Klebstoffmeniskus verhindert werden, die wiederum zu erhöhten mechanischen Belastungen im Bereich der darauf aufliegenden Deckschicht führen würde. Da die flächige Erstreckung des Klebstoffmeniskus durch diejenige des Mikrochips mitbestimmt wird, wird die Grundfläche der Aussparung in der Ausgleichsfolie vorzugsweise wenigstens 20 Prozent, vorzugsweise zwischen 30 und 50 Prozent, größer als die Grundfläche des Mikrochips gewählt.

Bevorzugt wird auf die Trägerfolie eine Ausgleichsfolie aufgebracht, welche dicker als der Mikrochip ist, insbesondere dicker als der Mikrochip, und eine Klebstoffschicht ist, welche den Mikrochip in der Aussparung der Ausgleichsfolie fixiert. Dadurch wird eine vollständige Einbettung des Mikrochips in der Aussparung ermöglicht.

Als Ausgleichsmasse wird bevorzugt ein thermoplastischer Kunststoff, insbesondere ein thermoplastisches Polyurethan (TPU) oder ein aromatischer Polyester, wie beispielsweise das unter dem Handelsnamen bekannte APEC, eingesetzt.

Die Ausgleichsmasse wird bevorzugt mit zumindest einem Infrarot-Absorber (IR-Absorber) angereichert. Dies weist den Vorteil auf, dass ein für das Inlay vorgesehener Mikrochip gegen IR-Strahlung abgeschirmt wird. Solche gegen IR-Strahlung empfindliche Mikrochips werden bevorzugt eingesetzt und weisen den Vorteil auf, dass diese einen Schutzmechanismus gegen unberechtigten physischen Zugriff ermöglichen, in deren Zuge beispielsweise mittels Messspitzen versucht wird, eine Kontaktierung zum Mikrochip herzustellen, um diesen auszulesen. Sensoren eines solchen Mikrochips reagieren auf Licht, auch IR-Licht in einem Bereich von 600 Nanometer bis 1100 Nanometer, und verhindern dann ein Auslesen. Die Anreicherung der Ausgleichsmasse mit IR-Absorber ermöglicht auch, dass durch das Aufbringen auf den Mikrochip und das Ausfüllen des zumindest einen Freiraums im Ausschnittsfenster sowohl die Oberfläche als auch seitliche Ränder des Mikrochips vor dem Licht geschützt sind. Einen rückseitigen Schutz des Mikrochips bedarf es nicht, da in diesem Bereich der Anschlussbereich liegt, in welchem die Antennenwindungen verlaufen und den Mikrochip abschirmen. Bevorzugt wird als IR-Absorber beispielsweise Ruß, insbesondere in einer nanostrukturierten Form, eingebracht. Alternativ können auch nanoskalierte Zinkoxid-Pigmente, vorzugsweise mit einer Antimondotierung, eingebracht werden.

Gemäß einer ersten Ausführungsform des Verfahrens wird die Ausgleichsmasse als eine flüssige Masse aufgetragen. Dies ermöglicht eine gleichmäßige Verteilung in dem zumindest einen Freiraum innerhalb des Ausschnittfensters.

Bevorzugt wird die als flüssige Masse ausgebildete Ausgleichsmasse mit einer Auftragsdüse, insbesondere Inkjet-Düse, dem zumindest einen Freiraum zugeführt. Dadurch kann ein einfaches Auftragen der flüssigen Masse in das Ausschnittfenster ermöglicht sein. Zudem kann auch eine gute Dosierung bezüglich der Menge an aufzubringender Ausgleichsmasse ermöglicht sein.

Eine weitere bevorzugte Ausgestaltung des Verfahrens sieht vor, dass die als flüssige Masse ausgebildete Ausgleichsmasse nach dem Aufbringen der Ausgleichsfolie auf die Trägerfolie und während des Aushärtens oder nach dem Aushärten des den Mikrochip aufnehmenden Klebstoffs in den zumindest einen Freiraum eingebracht wird. Diese Ausführungsform weist den Vorteil auf, dass ein Eindringen der flüssigen Masse im Randbereich der Aussparung zwischen die Ausgleichsfolie und der Trägerschicht ausbleibt.

Gemäß einer alternativen Ausführungsform des Verfahrens ist die Ausgleichsmasse als ein Patch ausgebildet, welches auf den Chip bis in die Aussparung hinein eingebracht wird. Ein solches Patch weist den Vorteil auf, dass dieses in einfacher Weise über ein Trägermedium zugeführt werden kann, wodurch eine hohe Taktung in der Produktion ermöglicht ist.

Die alternative Ausführungsform des Verfahrens mit Verwendung eines Patches als Ausgleichsmasse sieht bevorzugt vor, dass das Patch auf den Mikrochip aufgelegt oder aufgeklebt oder unter Temperatur und Druck auf den Mikrochip vorfixiert wird. Dies kann vor, während oder nach dem Aushärten des den Mikrochip aufnehmenden Klebstoffs erfolgen. Insbesondere bei einem noch nicht ausgehärteten Klebstoff kann sowohl das Positionieren und Aufdrücken des Mikrochips in den Klebstoff als auch gleichzeitig das Vorfixieren des Patches auf dem Mikrochip oder dem Ausschnittfenster in einem Arbeitsschritt erfolgen. Auch kann eine gleichzeitige Aushärtung des Klebstoffs und der eingebrachten Ausgleichsmasse erfolgen. Durch das Aufbringen des Patches auf den Mikrochip kann die Verwendung eines Silikonpapiers entbehrlich sein, welches bspw. als Schutz gegen herausquellenden Klebstoff und Anhaften an einem auf den Mikrochip einwirkenden Werkzeug eingesetzt wird, während der Mikrochip im Anschlussbereich gegen den Klebstoff gedrückt wird.

Eine weitere vorteilhafte Ausgestaltung des Verfahrens sieht vor, dass das aus einer Ausgleichsmasse gebildete Patch mit einer flächigen Erstreckung bereitgestellt wird, welche gleich groß oder größer, beispielsweise bis zu 50 Prozent größer, als die flächige Erstreckung der Oberseite des Mikrochips ist. Dadurch werden bei einem darauffolgenden Laminieren auch die seitlichen Ränder des Chips mit dem Patch überdeckt. Insbesondere bei der Einbringung von IR-Absorbern kann dadurch in einfacher Weise ein zusätzlicher und vollständiger IR-Schutz des Mikrochips gegeben sein.

Die der Erfindung zugrundeliegende Aufgabe wird des Weiteren durch ein Inlay für einen Folienverbund eines Sicherheits- oder Wertdokumentes gelöst, welches eine Trägerfolie und eine auf der Trägerfolie angeordnete, vorzugsweise aufgedruckte, Antenne sowie einen Mikrochip aufweist, der mit der Antenne im Anschlussbereich kontaktiert und durch einen Klebstoff auf der Trägerfolie fixiert ist, sowie eine Ausgleichsfolie, welche auf der Trägerfolie vorgesehen ist und eine Aussparung aufweist, innerhalb der der Mikrochip positioniert ist und eine Deckfolie aufweist, welche auf der Ausgleichsfolie vorgesehen ist und die Aussparung der Ausgleichsfolie vollständig überdeckt, so dass innerhalb der Aussparung der Ausgleichsfolie und zwischen der Trägerfolie und der Deckfolie ein Ausschnittfenster gebildet ist und in diesem Ausschnittfenster zumindest ein Freiraum gebildet ist, der mit einer Ausgleichsmasse ausgefüllt ist, wobei die Ausgleichsmasse mit einem Volumen eingebracht ist, welches größer als der zumindest eine Freiraum in der Aussparung ist und die Ausgleichsmasse sich über den Randbereich der Aussparung der Ausgleichfolie hinaus und zwischen der Ausgleichsfolie und der darüber liegenden Deckfolie erstreckt. Dadurch kann das Ausschnittfenster innerhalb der Ausgleichsfolie und zwischen der Trägerfolie und der Deckfolie und zwischen der Trägerfolie und der Deckfolie, soweit dieses nicht durch den Mikrochip und den Klebstoff, der den Mikrochip aufnimmt, ausgefüllt ist, mit der Ausgleichmasse gefüllt werden. Dies ermöglicht eine gleichmäßige Druckverteilung bei der Lamination der Trägerfolie mit einem Mikrochip in einem Ausschnittfenster, einer Ausgleichsfolie und Deckfolie zu einem Inlay.

Bevorzugt ist die Ausgleichsmasse ein thermoplastischer Kunststoff, insbesondere APEC oder TPU. Dadurch kann eine gute Verarbeitung bei der Lamination ermöglicht sein.

Bevorzugt ist die Ausgleichsmasse mit zumindest einem IR-Absorber, insbesondere Ruß oder Zinkoxid-Pigmenten, versehen. Dies ermöglicht eine Abschirmung eines gegen Licht und IR-Strahlung empfindlichen Mikrochips, insbesondere eines Cryptoprozessors.

Die Trägerfolie, Deckfolie und/oder Ausgleichsfolie sind bevorzugt aus Polycarbonat (PC), Polyvinylchlorid (PVC), Acrylnitryl-Butadien-Styrol (ABS), Polyethylenterephthalat (PET) hergestellt.

Als Klebstoff wird bevorzugt ein elektrisch leitfähiger ACA (anisotrop leitfähiger Klebstoff) oder ICA (isotrop leitfähiger Klebstoff) bzw. auch ein nichtleitfähiger NCA (nicht leitfähiger Klebstoff) eingesetzt, wie sie in üblichen Flip-Chip-Prozessen zum Einsatz kommen.

Die der Erfindung zugrundeliegende Aufgabe wird des Weiteren durch ein Sicherheitsdokument gelöst, welches ein Inlay gemäß einer der vorbeschriebenen Ausführungsformen umfasst.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht auf ein Inlay,
Figur 2 eine schematische Schnittansicht des Inlays entlang der Linie I-I in Figur 1,
Figur 3 eine schematische Schnittansicht eines Verfahrensschritts zur Herstellung des Inlays gemäß den Figuren 1 und 2, und
Figur 4 eine schematische Schnittansicht eines alternativen Verfahrensschritts zur Herstellung des Inlays gemäß den Figuren 1 und 2.

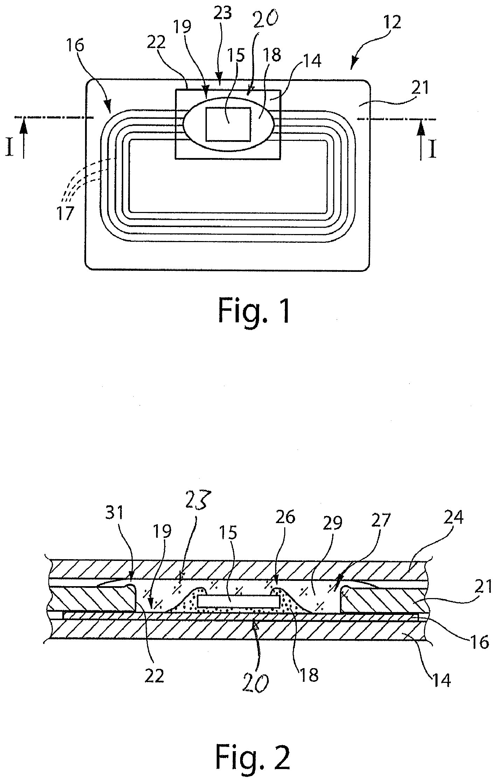

In Figur 1 ist eine schematische Ansicht auf ein Inlay 12 dargestellt. Die Figur 2 zeigt eine schematische Schnittansicht entlang der Linie I-I in Figur 1.

Dieses Inlay 12 umfasst zumindest eine Trägerfolie 14, auf der eine Antenne 16 aufgebracht ist. Diese Antenne 16 in Figur 1 ist vereinfacht in Figur 2 als Schicht dargestellt. Diese Antenne 16 umfasst mehrere Windungen 17. Die Antenne 16 ist bevorzugt aufgedruckt, insbesondere mittels einer Silberpaste aufgedruckt. In einem Anschlussbereich 20, in welchem Anschlussenden der Windungen 17 der Antenne 16 enden, ist ein Mikrochip 15 zur Kontaktierung mit der Antenne 16 vorgesehen. Dieser Mikrochip 15 wird durch einen Klebstoff 18 auf dem Träger 14 fixiert und mit der Antenne 16 kontaktiert. Bevorzugt ist ein flächiger Klebstoffauftrag auf eine Unterseite des Mikrochips 15 oder auf den Anschlussbereich 20 der Trägerfolie 14 vorgesehen, so dass der darauf aufgebrachte Mikrochip 15 vollständig von dem Klebstoff 18 unterfüllt und eine flächige Anlage der Unterseite des Mikrochips 15 in dem verbleibenden Klebstoff 18 gegeben ist. Der Klebstoff 18 wiederum liegt vollflächig auf der Trägerfolie 14 auf. Beim Positionieren und Aufdrücken des Mikrochips 15 auf den Klebstoff 18 entsteht ein Klebstoffmeniskus 19. Als Klebstoffmeniskus wird der gegenüber dem Mikrochip 15 seitlich hervortretende überschüssige Klebstoff, der den Mikrochip 15 umgibt, bezeichnet. Dieser Klebstoffmeniskus 19 weist aus der Draufsicht zumeist eine runde oder ovale oder eine an diese Konturen angenäherte Kontur auf. Des Weiteren können obere Ränder des Mikrochips 15 von dem Klebstoff 18 zumindest teilweise umgeben sein, so dass nach dem Aushärten des Klebstoffs 18 eine Wulst 26 gebildet ist, welche auch als Klebstoffnase bezeichnet wird. Ausgehend von dieser Wulst 26 nimmt die Dicke des Klebstoffes 18 zum Rand des Klebstoffmeniskus 19 hin ab und läuft nach außen zur Bildung dieser runden oder ovalen Kontur des Klebstoffmeniskus 19 aus.

Auf der Trägerschicht 14 ist eine Ausgleichsfolie 21 aufgebracht. Diese Ausgleichsfolie 21 weist eine Aussparung 22 auf. Diese Aussparung 22 kann rechteckförmig oder quadratisch ausgebildet sein oder weitere Konturen umfassen. Die Ausgleichsfolie 21 überdeckt mit Ausnahme der Aussparung 22 vorzugsweise vollständig die Trägerfolie 14. Innerhalb der Aussparung 22 ist der Mikrochip 15 und Klebstoffmeniskus 19 vorgesehen. Die Aussparung 22 weist bevorzugt ein Format auf, welches größer als die flächige Erstreckung des Klebstoffmeniskus 19 ist, so dass jedenfalls die Ausgleichsfolie 21, insbesondere ein Randbereich der Aussparung 22, nicht an den Klebstoffmeniskus 19 angrenzt oder auf diesem aufliegt. Vielmehr ist zwischen dem Klebstoffmeniskus 19 und der Aussparung 22 ein Abstand gegeben. Auf der Ausgleichsfolie 21 ist eine Deckfolie 24 vorgesehen. Diese Deckfolie 24 erstreckt sich vollständig über die Aussparung 22, insbesondere im gleichen Umfang wie die Trägerfolie 14.

Durch die Aussparung 22 der Ausgleichsfolie 21 sowie der Trägerfolie 14 und Deckfolie 24 wird ein Ausschnittfenster 23 gebildet. Innerhalb dieses Ausschnittfensters 23 erstrecken sich der Klebstoffmeniskus 19 sowie der Mikrochip 15. Vor dem Laminieren eines Stapels der übereinanderliegenden Schichten, insbesondere zumindest der Trägerfolie 14, der Ausgleichsfolie 21 und der Deckfolie 24, ist innerhalb des Ausschnittfensters 23 ein Freiraum 27 gebildet. Dieser Freiraum 27 ergibt sich aus dem das Ausschnittfenster 23 bildenden Volumen, welches nicht durch den Mikrochip 15 und den Klebstoff 18 und gegebenenfalls die Antenne 16 eingenommen ist.

Bei dem erfindungsgemäßen Aufbau des Inlays 12 ist dieser Freiraum 27 mit einer Ausgleichsmasse 29 ausgefüllt. Diese Ausgleichsmasse 29 erstreckt sich innerhalb der Aussparung 22 im Ausschnittfenster 23. Bevorzugt überdeckt diese Ausgleichsmasse 29 eine Oberseite des Mikrochips 15. Die Oberseite des Mikrochips 15 liegt dem Klebstoff 18 gegenüber.

In Abhängigkeit des Herstellungsprozesses der Aussparung 22 in der Ausgleichsfolie 21 kann sich an den Randbereich der Aussparung 22 angrenzend eine aufgeschmolzene Kante oder eine Überhöhung 31 bilden, welche bei der beispielsweise in Figur 2 dargestellten Ausrichtung der Ausgleichsfolie 21 zur Deckfolie 24 weist. Bevorzugt erstreckt sich die Ausgleichsmasse 29 auch im Randbereich der Aussparung 22 zwischen der Ausgleichsfolie 21 und der Deckfolie 24. Zur Herstellung der Aussparung 22 in der Ausgleichsfolie 21 kann eine mechanische Stanzung oder ein Ausscheiden mittels eines Lasers, insbesondere Kurzpulslaser, vorgesehen sein.

Durch das Einbringen der Ausgleichsmasse 29 in das Ausschnittfenster 23 zum Ausfüllen des zumindest einen Freiraums 27 wird ein Höhenunterschied zwischen der Überhöhung 31 der Ausgleichsfolie 21 und der sonstigen Oberfläche der Ausgleichsfolie 21 über eine längere Wegstrecke und mithin mit geringerer Steigung ermöglicht, so dass sowohl bezüglich der Überhöhung 31 als auch der aus Klebstoff bestehenden Wulst 26 eine Glättung erfolgen kann. Gleichzeitig können Hohlräume zwischen der Deckfolie 24 und der darunterliegenden Aussparung 22 ausgefüllt sein.

Diese Einbringung der Ausgleichsmasse 29 ermöglicht für einen anschließenden Laminierschritt, dass eine gleichmäßige Druckbelastung auf die Trägerfolie 14, Ausgleichsfolie 21 und Deckfolie 24, insbesondere auch im Bereich der Aussparung 22, ermöglicht ist, in welcher der Mikrochip 15 liegt. Dadurch kann eine Bruchwahrscheinlichkeit des Mikrochips 15 und/oder der Antenne 16 herabgesetzt oder sogar eliminiert sein.

Wenigstens eine von Trägerfolie 14, Ausgleichsfolie 21 und Deckfolie 24 kann aus einem oder mehreren Polymeren hergestellt sein. Insbesondere umfassen diese Polycarbonate (PC) oder bestehen aus PC. Weitere Alternativen können sein: Bisphenol-A-Polycarbonat, Carboxymodifiziertes PC, Polyethylenterephthalat (PET), dessen Derivate wie Glycolmodifiziertem PET (PETG), Polyvinylchlorid (PVC), Polyvinylbutyral (PVB), Polymethylmethacrylat (PMMA), Polyimid (PI), Polybutylenterephthalat (PBT), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS), und/oder deren Derivate, oder Papier und/oder Pappe oder Mischungen der vorgenannten Materialien.

Als Klebstoff 18 wird bevorzugt elektrisch leitfähiger ACA oder ICA bzw. auch nichtleitfähiger NCA eingesetzt, wie sie in üblichen Flip-Chip-Prozessen zum Einsatz kommen.

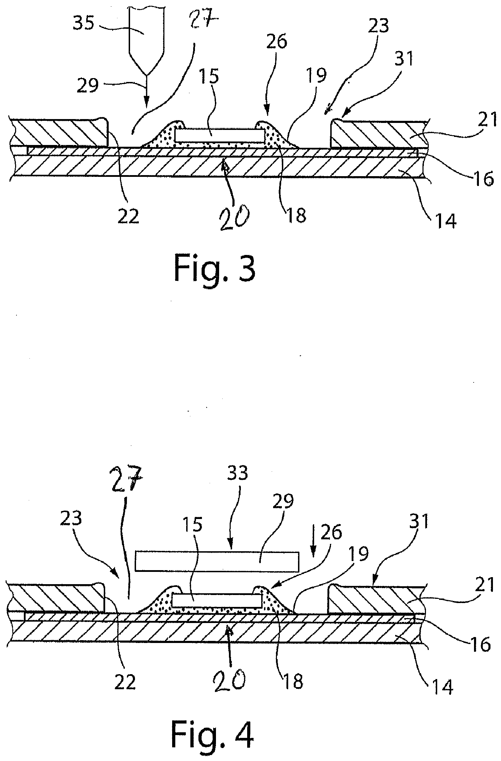

Als Ausgleichsmasse 29 wird ein thermoplastischer Kunststoff eingesetzt. Dabei kann bei der Ausbildung der Ausgleichsmasse 29 als fließfähige Masse beispielsweise ein APEC (Polycarbonat-Basis) verwendet werden, wie dies nachfolgend noch anhand Figur 3 beschrieben ist. Alternativ kann ein thermoplastisches Polyurethan eingesetzt werden, aus welchem beispielsweise ein Patch 33 gebildet ist, wie dies nachfolgend anhand von Figur 4 beschrieben ist.

Die Ausgleichsmasse 29 ist bevorzugt mit IR-Absorbern, wie beispielsweise Ruß oder Zinkoxid-Pigmenten mit Antimondotierung, angereichert.

Zur Herstellung eines Inlays 12 gemäß den Figuren 1 und 2 wird eine Trägerfolie 14 bereitgestellt. Auf diese Trägerfolie 14 wird in einem weiteren Bearbeitungsschritt die Antenne 16 aufgedruckt oder, sofern diese bereitgestellt wird, aufgeklebt. Darauffolgend werden im Anschlussbereich 20 der Klebstoff 18 aufgebracht und der Mikrochip 15 darauf fixiert. Davor oder danach kann die Ausgleichsfolie 21 mit der darin eingebrachten Aussparung 22 auf die Trägerfolie 14 aufgebracht sein.

Vor dem Aufbringen der Deckfolie 24 auf die Ausgleichsfolie 21 wird der zumindest eine innerhalb des Austrittsfensters 23 gebildete Freiraum 27 mit der Ausgleichsmasse 29 ausgefüllt. Beispielsweise kann dies gemäß Figur 3 durch eine Düse 35, insbesondere durch eine Inkjet-Düse, erfolgen, durch welche die Ausgleichsmasse 29 dosiert ausgegeben wird. Diese Düse 35 kann an nur einer Stelle konzentriert oder durch eine kreisförmige Bewegung verteilt die Ausgleichsmasse 29 einbringen. Alternativ können auch mehrere Düsen, vorzugsweise in einer Zeile ausgerichtet, vorgesehen sein, so dass das Ausschnittfenster 23 unterhalb den Düsen 35 verfahren wird und die einzelnen Düsen 35 entsprechend des Verlaufs des zumindest einen Freiraums 27 und des Ausgabevolumens zur Ausgabe der Ausgleichsmasse 29 angesteuert werden. Beispielsweise wird auf die Oberseite des Mikrochips 19 eine geringere Menge an Ausgleichsmasse 29 ausgegeben, als im benachbarten Bereich, in dem sich der Kunststoffmeniskus 19 erstreckt.

Darauffolgend wird die Deckfolie 24 auf die Ausgleichsfolie 21 aufgebracht und der Stapel aus Trägerfolie 14, Ausgleichsfolie 21 und Deckfolie 24 mit dem in dem Austrittsfenster 23 angeordneten Mikrochip 15 und der auf der Trägerfolie 14 angeordneten Antenne 16 der Laminationsvorrichtung zugeführt und laminiert. Dadurch kann bspw. ein Prelaminat oder ein Inlay 12 hergestellt werden, welches als Halbzeug zur Herstellung beispielsweise einer Chipkarte oder einer Datenseite für einen Personalausweis oder dergleichen eingesetzt werden kann, oder gleich zusammen mit weiteren Materialschichten eine fertige Chipkarte laminiert werden.

In Figur 4 ist eine zu der von Figur 3 alternative Ausführungsform der Erfindung dargestellt. Die Ausgleichsmasse 29 kann anstelle der Bereitstellung als flüssige Masse auch als Patch 33 bereitgestellt werden. Dieses Patch 33 weist bevorzugt eine flächige Erstreckung auf, welche gleich oder größer als eine zur Deckfolie 24 weisende Oberseite des Mikrochips 15 ist. Zur Herstellung eines Stapels für ein zu laminierendes Inlay 12 kann dieses Patch 33 zum gleichen Zeitpunkt im Ausschnittfenster 23 positioniert werden, zu welchem gemäß der Ausführungsform von Figur 3 die Ausgleichsmasse 29 über die zumindest eine Düse 35 im zumindest einen Freiraum 27 zugeführt würde.

Alternativ kann das Patch 33 bereits auf dem Mikrochip in seiner endgültigen Position im Anschlussbereich 20 auf den Klebstoff 18 aufgedrückt sein. Das Patch 33 kann dabei als Schutz gegen herausquellenden Klebstoff 18 gegenüber einem Stempel wirken, durch welchen das Patch 33 auf den Mikrochip 15 und der Mikrochip 15 auf den Klebstoff 18 gedrückt wird.

Vor, während oder nach dem Aufbringen des Patches 33 kann die Ausgleichsfolie 21 auf die Trägerfolie 14 aufgebracht sein.

Nach dem Aufbringen des Patches 33, das noch nicht vorgeformt oder angeschmolzen ist, wird die Deckfolie 24 aufgebracht und dieser Stapel der Laminiervorrichtung zum Laminieren zugeführt. Die Ausgleichsmasse 29 des Patches 33 fließt und füllt den zumindest einen Freiraum 27 aus. Daraus wird wiederum ein Inlay beziehungsweise Prelaminat gebildet, welches für die Weiterverarbeitung zur Herstellung einer Chipkarte, einer Datenseite eines Personalausweises oder dergleichen eingesetzt werden kann.

### Bezugszeichenliste

**Tabelle 1**

| | |
|---|---|
| 11. | Inlay |
| 14. | Trägerfolie |
| 15. | Mikrochip |
| 16. | Antenne |
| 17. | Windung |
| 18. | Klebstoff |
| 19. | Klebstoffmeniskus |
| 20. | Anschlussbereich |

| | |
|---|---|
| 21. | Ausgleichsfolie |
| 22. | Aussparung |
| 23. | Ausschnittsfenster |
| 24. | Folie |
| 26. | Wulst |
| 27. | Freiraum |
| 29. | Ausgleichsmasse |
| 31. | Überhöhung |
| 33. | Patch |
| 35. | Düse |

## Patentansprüche

1. Verfahren zur Herstellung eines Inlays für einen Folienverbund eines Sicherheits- oder Wertdokuments,
- bei dem auf eine Trägerfolie (14) wenigstens eine Antenne (16) aufgebracht wird,
- bei dem ein Mikrochip (15) in einem Anschlussbereich (20) der Antenne (16) mit der Antenne (16) kontaktiert und der Mikrochip (15) mit einem Klebstoff (18) im Anschlussbereich (20) fixiert wird,
- bei dem eine Ausgleichsfolie (21) mit einer Aussparung (22), die größer als der Mikrochip (15) ist, auf die Trägerfolie (14) aufgebracht wird,
- bei dem eine Deckfolie (24) auf die Ausgleichsfolie (21) aufgebracht wird, welche die Aussparung (22) der Ausgleichsfolie (21) vollständig überdeckt und innerhalb der Aussparung (22) der Ausgleichsfolie (21) liegend und durch die Trägerfolie (14) und die Deckfolie (24) begrenzt ein Ausschnittfenster (23) gebildet wird, so dass innerhalb des Ausschnittfensters (23) zumindest ein Freiraum (27) gebildet wird,
- bei dem dieser zumindest eine Freiraum (27) mit einer Ausgleichsmasse (29) gefüllt wird,
**dadurch gekennzeichnet,**
- **dass** die Ausgleichsmasse (29) mit einem Volumen eingebracht wird, welches größer als der zumindest eine Freiraum (27) in der Aussparung (22) ist.

2. Verfahren nach Anspruch 1, **dadurch gekennzeichnet, dass** die Ausgleichsmasse (29) in einem Volumen eingebracht wird, so dass der Mikrochip (15) vollständig mit der Ausgleichsmasse (29) bedeckt und der zumindest eine Freiraum (27) ausgefüllt wird.

3. Verfahren nach einem der vorhergehenden Ansprüche, **dadurch gekennzeichnet, dass** die Aussparung (22) in der Ausgleichsfolie (21) in einer Größe bereitgestellt wird, die größer als ein Klebstoffmeniskus (19) ist, der durch einen seitlich gegenüber dem Mikrochip (15) heraustretenden Klebstoff (18) nach dem Aufbringen des Mikrochips (15) auf dem Klebstoff (18) gebildet wird.

4. Verfahren nach einem der vorhergehenden Ansprüche, **dadurch gekennzeichnet, dass** auf die Trägerfolie (14) eine Ausgleichsfolie (21) aufgebracht wird, welche dicker als der Mikrochip (15) ist, insbesondere dicker als der Mikrochip (15) und eine den Mikrochip (15) auf der Trägerfolie (14) fixierende Schicht aus Klebstoff (18) ist.

5. Verfahren nach einem der vorhergehenden Ansprüche, **dadurch gekennzeichnet, dass** die Ausgleichsmasse (29) als eine flüssige Masse in die Aussparung (22) eingebracht wird.

6. Verfahren nach Anspruch 5, **dadurch gekennzeichnet, dass** die Ausgleichsmasse (29) durch eine Auftragsdüse (35) in die Aussparung (22) eingebracht wird.

7. Verfahren nach Anspruch 5 oder 6, **dadurch gekennzeichnet, dass** die als flüssige Masse ausgebildete Ausgleichsmasse (29) nach dem Aufbringen der Ausgleichsfolie (21) auf die Trägerfolie (14) und nach dem Aushärten des den Mikrochip (15) aufnehmenden Klebstoffs (18) in den zumindest einen Freiraum (27) der Aussparung (22) eingebracht wird.

8. Verfahren nach einem der Ansprüche 1 bis 4, **dadurch gekennzeichnet, dass** die Ausgleichsmasse (29) als ein Patch (33) in die Aussparung (22) eingebracht wird.

9. Verfahren nach Anspruch 8, **dadurch gekennzeichnet, dass** die als Patch (33) ausgebildete Ausgleichsmasse (29) nach dem Aushärten des den Mikrochip (15) aufnehmenden Klebstoffs (18) auf den Mikrochip (15) aufgelegt oder aufgeklebt oder unter Temperatur und Druck auf dem Mikrochip (15) vorfixiert wird.

10. Verfahren nach Anspruch 9, **dadurch gekennzeichnet, dass** der Patch (33) mit einer flächigen Erstreckung bereitgestellt wird, durch welche zumindest eine Oberseite des Mikrochips (15) vollständig überdeckt wird.

11. Inlay für einen Folienverbund eines Sicherheits- oder Wertdokumentes, welches insbesondere nach einem Verfahren gemäß einem der vorhergehenden Ansprüche hergestellt ist,
- mit einer Trägerfolie (14),
- mit einer auf der Trägerfolie (14) angeordneten Antenne (16),
- mit einem Mikrochip (15), der in einem Anschlussbereich (20) mit der Antenne (16) kontaktiert und durch einen Klebstoff (18) auf der Trägerfolie (14) fixiert ist,
- mit einer Ausgleichsfolie (21), welche auf der Trägerfolie (14) vorgesehen ist und eine Aussparung (22) aufweist, innerhalb der der Mikrochip (15) positioniert ist,
- mit einer Deckfolie (24), welche auf der Ausgleichsfolie (21) vorgesehen ist und die Aussparung (22) der Ausgleichsfolie (21) vollständig überdeckt, wobei innerhalb der Aussparung (22) der Ausgleichsfolie (21) liegend und durch die Trägerfolie (14) und die Deckfolie (24) begrenzt ein Ausschnittfenster (23) gebildet ist, so dass innerhalb der Aussparung (22) der Ausgleichsfolie (21) und zwischen der der Deckfolie (24) und Trägerfolie (14) sowie dem sich auf der Trägerfolie (14) aufgebrachten und in das Ausschnittfenster (23) erstreckenden Klebstoff (18) und Mikrochip (15) zumindest ein Freiraum (27) gebildet ist, und
der zumindest eine Freiraum (27) mit einer Ausgleichsmasse (29) ausgefüllt ist,
**dadurch gekennzeichnet,**
- **dass** die Ausgleichsmasse (29) mit einem Volumen eingebracht ist, welches größer als der zumindest eine Freiraum (27) in der Aussparung (22) ist und die Ausgleichsmasse (29) sich über den Randbereich der Aussparung (22) der Ausgleichsfolie (21) hinaus und zwischen der Ausgleichsfolie und der darüber liegenden Deckschichtfolie (24) erstreckt.

12. Inlay nach Anspruch 11, **dadurch gekennzeichnet, dass** ein zur Trägerfolie (14) weisender Randbereich der Aussparung (22) der Ausgleichsfolie (21) unmittelbar auf der Trägerfolie (14) oder unter Zwischenschaltung der Antenne (16) auf der Trägerfolie (14) aufliegt.

13. Inlay nach Anspruch 11, **dadurch gekennzeichnet, dass** ein zur Deckfolie (24) weisender Randbereich der Aussparung (22) der Ausgleichsfolie (21) unmittelbar an der Deckfolie (24) anliegt oder unter Zwischenschaltung eines Randabschnitts der Ausgleichsmasse (29), welche eine an der Aussparung (22) gebildete und zur Decklage weisende Überhöhung (31) überdeckt.

14. Sicherheitsdokument mit einem Inlay gemäß einem der Ansprüche 11 bis 13.

## Claims

1. A method of fabricating an inlay for a film composite of a security document or document of value,
- wherein at least one antenna (16) is applied onto a support film (14),
- wherein a microchip (15) is brought into contacted with the antenna (16) in a contact area (20) of said antenna (16) and the microchip (15) is fixedly fastened in the contact area (20) using an adhesive (18),
- wherein a compensating film (21) having a recess (22) that is larger than the microchip (15) is applied onto the support film (14),
- wherein a covering film (24) is applied onto the compensating film (21) so as to cover the recess (22) in the compensating film (21) in its entirety, and wherein a cut-out window (23) is formed within the recess (22) of the compensating film (21) and is bounded by the support film (14) and the covering film (24) in such a manner that at least one empty space (27) is formed within the cut-out window (23),
- wherein said at least one empty space (27) is filled with a compensating mass (29),
**characterised in that**
- the compensating mass (29) is inserted with a volume that is greater than the at least one empty space (27) formed in the recess (22).

2. The method as claimed in claim 1, **characterised in that** the volume of the compensating mass (29) inserted is such that the microchip (15) is entirely covered by the compensating mass (29) and the at least one empty space (27) is filled.

3. The method as claimed in any of the preceding claims, **characterised in that** the recess (22) formed in the compensating film (21) is sized to be larger than an adhesive meniscus (19) that is formed by an amount of adhesive (18) protruding laterally from the microchip (15) once the microchip (15) has been applied onto the adhesive (18).

4. The method as claimed in any of the preceding claims, **characterised in that** the support film (14) has a compensating film (21) applied thereon which is thicker than the microchip (15), in particular thicker than the microchip (15) and a layer consisting of an adhesive (18) attaching said microchip (15) to the support film (14).

5. The method as claimed in any of the preceding claims, **characterised in that** the compensating mass (29) is inserted into the recess (22) in the form of a liquid mass.

6. The method as claimed in claim 5, **characterised in that** the compensating mass (29) is inserted into the recess (22) via an applicator nozzle (35).

7. The method as claimed in claim 5 or 6, **characterised in that** the compensating mass (29) which is provided as a liquid mass is inserted into the at least one empty space (27) formed in the recess (22) once the compensating film (21) has been applied onto the support film (14) and the adhesive (18) receiving the microchip (15) has finished curing.

8. The method as claimed in any one of claims 1 to 4, **characterised in that** the compensating mass (29) is inserted into the recess (22) in the form of a patch (33) .

9. The method as claimed in claim 8, **characterised in that** the compensating mass (29) which is provided as a patch (33) is placed onto, or adhered to, the microchip (15) once the adhesive (18) receiving the microchip (15) has finished curing, or is pre-fastened to said microchip (15) using heat and pressure.

10. The method as claimed in claim 9, **characterised in that** the patch (33) is provided with a surface extension covering at least a top surface of the microchip (15) in its entirety.

11. An inlay for a film composite of a security document or document of value fabricated in particular using a method according to any of the preceding claims, including:
- a support film (14),
- an antenna (16) disposed on the support film (14),
- a microchip (15) which is brought into contact with the antenna (16) in a contact area (20) and is fixedly fastened to the support film (14) using an adhesive (18),
- a compensating film (21) which is provided on the support film (14) and has a recess (22) in which the microchip (15) is positioned,
- a covering film (24) which is provided on the compensating film (21) and which covers the recess (22) in the compensating film (21) in its entirety, with a cut-out window (23) being formed within the recess (22) in the compensating film (21) and being bounded by the support film (14) and the covering film (24), such that within the recess (22) in the compensating film (21) and between the covering film (24), on the one hand, and the support film (14), the adhesive (18) applied onto the support film (14) and extending into the cut-out window (23), and the microchip (15), on the other, at least one empty space (27) is formed, and
the at least one empty space (27) is filled with a compensating mass (29),
**characterised in that**
- the compensating mass (29) is inserted with a volume that is greater than the at least one empty space (27) of the recess (22) and the compensating mass (29) extends beyond the edge region of the recess (22) in the compensating film (21) and into the space between the compensating film and the overlying covering layer film (24).

12. The inlay as claimed in claim 11, **characterised in that** an edge region of the recess (22) in the compensating film (21) facing towards the support film (14) is supported directly by the support film (14) or is supported by the support film (14) with the antenna (16) being interposed therebetween.

13. The inlay as claimed in claim 11, **characterised in that** an edge region of the recess (22) in the compensating film (21) facing towards the covering film (24) is placed against the covering film (24), either directly or with an edge portion of the compensating mass (29) which covers a raised part (31) that is formed in the recess (22) and faces towards the covering layer being interposed therebetween.

14. A security document having an inlay as claimed in any one of claims 11 to 13.

## Revendications

1. Procédé destiné à fabriquer un inlay pour un composite de feuilles d'un document de sécurité ou de valeur, lors duquel
- au moins une antenne (16) est appliquée sur une feuille support (14),
- une puce (15) est mise en contact avec l'antenne (16) dans une zone de jonction (20) de l'antenne (16) et la puce (15) est fixée dans la zone de jonction (20) avec une colle (18),
- une feuille de compensation (21) pourvue d'un évidement (22) qui est plus grand que la puce (15) est appliquée sur la feuille support (14),
- une feuille de recouvrement (24) est appliquée sur la feuille de compensation (21) qui recouvre entièrement l'évidement (22) de la feuille de compensation (21) et une partie fenêtre (23) est formée à l'intérieur de l'évidement (22) de la feuille de compensation (21) et est délimitée par la feuille support (14) et par la feuille de recouvrement (24) de sorte qu'au moins un espace vide (27) est formé à l'intérieur de la partie fenêtre (23),
- ledit au moins un espace vide (27) est rempli par une matière de compensation (29),
**caractérisé en ce que**
- la matière de compensation (29) est insérée avec un volume qui est supérieur audit au moins un espace vide (27) formé dans l'évidement (22).

2. Procédé selon la revendication 1, **caractérisé en ce que** la matière de compensation (29) est insérée avec un volume tel que la puce (15) est entièrement recouverte par la matière de compensation (29) et que ledit au moins un espace vide (27) est rempli.

3. Procédé selon l'une quelconque des revendications précédentes, **caractérisé en ce que** l'évidement (22) prévu dans la feuille de compensation (21) est fourni dans une grandeur qui est supérieure à un ménisque de colle (19) formé par une colle (18) qui sort latéralement par rapport à la puce (15) après l'application de ladite puce (15) sur la colle (18).

4. Procédé selon l'une quelconque des revendications précédentes, **caractérisé en ce que** sur la feuille support (14) est appliquée une feuille de compensation (21) qui est plus épaisse que la puce (15), en particulier plus épaisse que la puce (15) et une couche de colle (18) qui fixe la puce (15) sur la feuille support (14).

5. Procédé selon l'une quelconque des revendications précédentes, **caractérisé en ce que** la matière de compensation (29) est insérée dans l'évidement (22) sous la forme d'une masse liquide.

6. Procédé selon la revendication 5, **caractérisé en ce que** la matière de compensation (29) est insérée dans l'évidement (22) par une buse d'application (35).

7. Procédé selon la revendication 5 ou 6, **caractérisé en ce que** la matière de compensation (29) formée en tant que masse liquide est insérée dans ledit au moins un espace vide (27) de l'évidement (22) après l'application de la feuille de compensation (21) sur la feuille support (14) et après le durcissement de la colle (18) recevant la puce (15).

8. Procédé selon l'une quelconque des revendications 1 à 4, **caractérisé en ce que** la matière de compensation (29) est insérée dans l'évidement (22) sous la forme d'un patch (33).

9. Procédé selon la revendication 8, **caractérisé en ce que** la matière de compensation (29) formée en tant que patch (33) est posée ou collée sur la puce (15) après le durcissement de la colle (18) recevant la puce (15) ou est préfixée sur la puce (15) en étant soumise à la chaleur et à la pression.

10. Procédé selon la revendication 9, **caractérisé en ce que** le patch (33) est fourni avec une extension de surface permettant de recouvrir entièrement au moins une face supérieure de la puce (15).

11. Inlay pour un composite de feuilles d'un document de sécurité ou de valeur, lequel est fabriqué conformément à un procédé selon l'une quelconque des revendications précédentes, pourvu
- d'une feuille support (14),
- d'une antenne (16) disposée sur la feuille support (14),
- d'une puce (15) qui est mise en contact avec l'antenne (16) dans une zone de jonction (20) et qui est fixée sur la feuille support (14) par une colle (18),
- d'une feuille de compensation (21) qui est prévue sur la feuille support (14) et présente un évidement (22) à l'intérieur duquel est positionnée la puce (15),
- d'une feuille de recouvrement (24) qui est prévue sur la feuille de compensation (21) et qui recouvre entièrement l'évidement (22) de la feuille de compensation (21), une partie fenêtre (23) située à l'intérieur de l'évidement (22) de la feuille de compensation (21) et délimitée par la feuille support (14) et par la feuille de recouvrement (24) étant formée de sorte qu'au moins un espace vide (27) est formé à l'intérieur de l'évidement (22) de la feuille de compensation (21), et ce entre la feuille de recouvrement (24) d'une part, et la feuille support (14), la colle (18) appliquée sur la feuille support (14) et s'étendant dans la fenêtre (23) ainsi que la puce (15) d'autre part, et que
ledit au moins un espace vide (27) est rempli par une matière de compensation (29),
**caractérisé en ce que**
- la matière de compensation (29) est insérée avec un volume qui est supérieur audit au moins un espace vide (27) formé dans l'évidement (22) et que la matière de compensation (29) s'étend au-delà de la partie en bordure de l'évidement (22) de la feuille de compensation (21) et entre la feuille de compensation et la feuille de recouvrement (24) posée sur celle-ci.

12. Inlay selon la revendication 11, **caractérisé en ce qu'**une partie en bordure de l'évidement (22) de la feuille de compensation (21) tournée vers la feuille support (14) repose directement sur la feuille support (14) ou repose sur la feuille support (14) avec intercalation de l'antenne (16).

13. Inlay selon la revendication 11, **caractérisé en ce qu'**une partie en bordure de l'évidement (22) de la feuille de compensation (21) tournée vers la feuille de recouvrement (24) repose directement contre la feuille de recouvrement (24), ou repose sur celle-ci avec intercalation d'une partie périphérique de la matière de compensation (29) qui recouvre une surélévation (31) formée au niveau de l'évidement (22) et tournée vers ladite couche de recouvrement.

14. Document de sécurité pourvu d'un inlay selon l'une quelconque des revendications 11 à 13.
